# EUROPÄISCHE PATENTSCHRIFT

(11) **EP 2 981 786 B1**
(45) Veröffentlichungstag und Bekanntmachung des Hinweises auf die Patenterteilung: **24.11.2021**
(21) Anmeldenummer: 14715581.6
(22) Anmeldetag: 03.04.2014
(51) Int. Cl.: G01C 11/02, B64D 47/08, G03B 15/00, B64C 39/02

(54) **STEUERUNG EINER BILDAUSLÖSUNG ZUR LUFTBILDERFASSUNG IN NADIR-AUSRICHTUNG FÜR EIN UNBEMANNTES FLUGGERÄT**
CONTROL OF AN IMAGE TRIGGERING SYSTEM FOR TAKING AERIAL PHOTOGRAPHS IN NADIR ALIGNMENT FOR AN UNMANNED AIRCRAFT
COMMANDE D'UN DÉCLENCHEMENT D'IMAGE POUR LA DÉTECTION D'IMAGES AÉRIENNES DANS UN DISPOSITIF NADIR POUR UN AÉRONEF INHABITÉ

(30) Priorität: 05.04.2013 EP 13162632
(43) Veröffentlichungstag der Anmeldung: 10.02.2016
(73) Patentinhaber: Leica Geosystems AG, 9435 Heerbrugg (CH)
(72) Erfinder: WAGNER, RÜDIGER J., CH-9463 Oberriet (CH); NADERHIRN, MICHAEL, A-4020 Linz (AT)
(74) Vertreter: Kaminski Harmann
(86) Internationale Anmeldenummer: PCT/EP2014/056715
(87) Internationale Veröffentlichungsnummer: WO 2014/161945

(56) Entgegenhaltungen:
- US-A1- 2003 048 357
- US-A1- 2012 120 069
- US-A1- 2013 076 862
- None

## Beschreibung

Die Erfindung betrifft ein Verfahren zur Erfassung von Luftbildern nach dem Oberbegriff des Anspruchs 1, eine Steuerungseinheit für einen unbemannten Luftbilderfassungsflug nach Anspruch 11 und ein unbemanntes Fluggerät nach Anspruch 13.

Unbemannte Fluggeräte (UAV) nach dem Stand der Technik werden neben militärischen Einsatzgebieten zunehmend auch zur zivilen Geländeerfassung und Erdbeobachtung eingesetzt. Dabei wird gemäss einer Flugplanung eine vorbestimmte Flugroute befolgt, wobei mittels einer Kamera oder eines abbildenden Sensors eine Vielzahl von Luftbildern und Daten zumeist mit einer bestimmten Bilderfassungsfrequenz und einer bestimmten Bildüberlappung (benachbarter Bilder) entlang der Route erfasst wird. Hierfür sind typischerweise jeweilige Auslösepunkte für die Bilderfassung im Flugplan definiert. Zudem werden Positions- und Ausrichtungsdaten für das Fluggerät gemessen und mit den jeweils erfassten Bildern verknüpft. Die Bildauslösung wird beispielsweise basierend auf erfassten GPS-Positionsdaten oder Zeitdaten ausgelöst.

US 2013/0076862 A1 und US 2012/0120069 A1 beschreiben Lösungen bei denen die Gesamtheit der während des Flugs erfassten Daten dann im Rahmen eines nachgeordneten "Post-Processings" derart verarbeitet werden, dass durch eine geeignete Verknüpfung der Bilder und Verrechnen der Lagedaten ein flächiges, stereophotogrammetrisches Abbild des erfassten Geländes und daraus ein orthogonales Produkt erzeugt wird.

Insbesondere leichte UAVs sind dabei sehr windanfällig und instabil d.h. deren jeweilige Lage kann durch schon wenig starke Windböen oder andere äussere Einflüsse deutlich beeinflusst und in unbestimmter Weise verändert werden. Dadurch werden die Luftbilder jeweils nicht mit gleicher Ausrichtung bzw. Blickwinkel des Fluggeräts erfasst, sondern weisen jeweils einen Versatz nicht nur in Flugrichtung sondern z.B. auch in eine Richtung orthogonal zur Flugrichtung auf (Blickrichtung).

Herkömmliche UAVs berücksichtigen bzw. korrigieren bei der Datenaufnahme und beim Auslösen der Bildaufnahme die räumliche Lage des Systems nicht derart aktiv, dass damit für die Bilderfassung eine einheitliche Blickrichtung garantiert werden könnte. Dies beeinträchtigt die Genauigkeit der postprozessierten Daten negativ, bis hin zu entstehenden Datenlücken, z.B. Bereiche des zu vermessenden Gebiets, die nicht bildmässig erfasst wurden. Durch die dabei erfassten Bilder mit unterschiedlichen Blickrichtungen verringert sich die Genauigkeit des daraus erzeugbaren Stereobildes, z.B. aufgrund perspektivischer Verzerrungen und verminderter Möglichkeit, Verknüpfungspunkte zwischen den Einzelbildern zu erzeugen. Diese sind für eine genaue Abgleichung der Stereobilder und einer Registrierung der Daten zueinander bei ungenauer GPS Bestimmung notwendig.

Wird das UAV durch eine Windböe erfasst und dadurch stark geneigt z.B. relativ zu einer Nadir- oder Horizontalausrichtung des UAVs so kann im Fall einer dabei erfolgten Luftbilderfassung nicht der gewünschte Geländebereich erfasst werden, sondern je nach Auslenkung des UAVs ein benachbarter oder gar ein Bereich, der keinen Überlapp mit zuvor erfassten Bildern aufweist.

Eine solche Datenlücke wird meist durch wiederholtes Überfliegen und erneutes Bilderfassen des betreffenden Gebiets geschlossen, wobei dies relativ zeitaufwändig ist. Aufgabe der vorliegenden Erfindung ist es, oben genannte Nachteile hinsichtlich Genauigkeit und Zeitaufwand bei der Luftbildaufnahme zu vermindern bzw. zu vermeiden.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein Verfahren zur Luftbilderfassung mit einem unbemannten und steuerbaren Fluggerät mit Kamera, insbesondere Drohne, während einer Flugbewegung des Fluggeräts, mit einem fortlaufenden Bestimmen einer Kameraposition und einer Ausrichtung einer optischen Kameraachse und einem Erfassen einer Luftbildsserie. Für jedes Bild der Luftbildserie wird das Erfassen des jeweiligen Luftbilds beim Durchfliegen eines jeweiligen Bildauslösebereichs mit dem Fluggerät ausgelöst, wobei die Lage des jeweiligen Bildauslösebereichs zumindest durch jeweils eine dem jeweiligen Bildauslösebereich zugeordnete Auslöseposition in einem Flugplan bestimmt ist, und in Abhängigkeit von der von der inertialen Messeiheit (IMU) fortlaufend aktuell bestimmten Ausrichtung der optischen Kameraachse beim Durchfliegen des jeweiligen Bildauslösebereichs hinsichtlich eines Erfüllens einer definierten Maximal-Winkelabweichung bezüglich einer vorbestimmten Raumausrichtung (für die Kameraachse).

Das Durchfliegen des jeweiligen Bildauslösebereichs mit dem Fluggerät betrifft insbesondere die Position der Kamera (bzw. des Fluggeräts) bezüglich der Position des Bildauslösebereichs während der Flugbewegung. Solange die aktuell bestimmte Kameraposition (Fluggerätposition) innerhalb dieses Bildauslösebereichs liegt, findet das Durchfliegen dieses Bereichs statt.

Da ein unbemanntes Fluggerät (UAV) typischerweise verhältnismässig schwache Motoren aufweist, kann eine aktive Ausgleichung der Lage des UAVs nur bedingt oder nicht erfolgen. Mittels einer Inertialmesseinheit (IMU) oder anderen Positionsmesssensoren kann jedoch die Lage im Raum des UAVs und der am UAV vorgesehenen Kamera kontinuierlich bestimmt werden.

Das UAV fliegt gemäss dem Flugplan ein aufzunehmendes Gebiet ab. Dabei wird die Kamera innerhalb des vorbestimmten Zeitraums ausgelöst. Unter Hinzunahme der IMU-Messdaten ist dabei die Lage im Raum in "Echtzeit" ermittelbar. Sollte zum erstmöglichen Auslösezeitpunkt (innerhalb des Bildauslösebereichs) das UAV bzw. Kameraachse (Richtung der Bilderfassung mit der Kamera) von einer bevorzugten Ausrichtung abweichen (z.B. starke Schräglage anstelle von einer Nadir- oder horizontalen Blickrichtung der Kamera), dann wird der Auslösezeitpunkt um eine bestimmte Zeit verzögert.

Dadurch können maximal viele Luftbilder in gleicher Blickrichtung (z.B. Nadir) jedoch mit unterschiedlicher Position (mit definierter Mindestüberdeckung) erhalten werden.

Insbesondere ist erfindungsgemäss der Bildauslösebereich durch einen vorgegebenen Überlappungsbereich für zwei während der Flugbewegung nacheinander zu erfassende Luftbilder definiert.

In diesem Zusammenhang entspricht der Überlappungsbereich insbesondere erfindungsgemäss einer Bildfläche zwischen 50% und 90% des Luftbilds, insbesondere einer Bildfläche zwischen 60% und 80% des Luftbilds.

Gemäss einer speziellen Ausführungsform der Erfindung ist der Bildauslösebereich derart bestimmt, dass ein bezüglich einer durch den Flugplan vorgegebenen Flugroute vorbestimmter Mindest-Bildüberlappungsbereich für die zwei nacheinander zu erfassenden Luftbilder definiert ist, insbesondere wobei der Mindest-Bildüberlappungsbereich beim Erfassen der zwei nacheinander zu erfassenden Luftbilder eingehalten wird.

Insbesondere beträgt der Mindest-Bildüberlappungsbereich dabei erfindungsgemäss 60% der Bildfläche des Luftbilds.

Bei einer Mindestüberlappung von 60 Prozent pro Stereo-Bild, kann bei der Flugplanung ein Sicherheitsfaktor von z.B. zusätzlichen 20 Prozent (insgesamt 80 Prozent Überlappung) der Bildfläche berücksichtigt und der Bildauslösebereich entsprechend definiert werden. Sollte dann eine Auslöseverzögerung nötig sein, kann die Verzögerung innerhalb der 20 Prozent Sicherheitsmarge (= Bildauslösebereich) zwischen Mindestüberlappung und Sicherheitsfaktor ausgenutzt werden.

Bezüglich einer weiteren speziellen Ausführungsform der Erfindung sind für den jeweiligen Bildauslösebereich in Abhängigkeit von der zugeordneten Auslöseposition eine Startposition und eine Endposition definiert, insbesondere in Abhängigkeit von dem vorgegebenen Überlappungsbereich, insbesondere bezüglich der durch den Flugplan vorgegebenen Flugroute.

D.h. sobald während der Flugbewegung die Grenzen des Sichtfelds für die Bilderfassung (deren aktuelle Positionen wiederum aus der fortlaufend bestimmten Kameraposition ableitbar sind) mit der Startposition des Bildauslösebereich übereinstimmen bis zum Erreichen einer Übereinstimmung des Sichtfeldgrenze mit der Endposition kann erfindungsgemäss ein Auslösen der Luftbilderfassung erfolgen. Diese Positionen können bestimmt sein durch Messvorgaben wie z.B. zulässige Überlappung der Bilder, Positionen der Auslösepunkte im Flugplan und/oder Solllage des Bildauslösebereichs relativ zum jeweiligen Auslösepunkt.

Gemäss einer speziellen Ausführung der Erfindung ist die vorbestimmte Raumausrichtung eine Nadir-Ausrichtung oder eine horizontale Ausrichtung der Kameraachse. D.h. die Luftbilder werden innerhalb des zulässigen Winkelbereichs um die Nadir-Ausrichtung der Kamera oder um die horizontale Ausrichtung der Kamera erfasst.

Hinsichtlich der Flugplanung kann gemäss der Erfindung insbesondere der Flugplan eine Mehrzahl von Auslösepositionen definieren, wobei jede Auslöseposition eine Lage eines jeweils zugeordneten Bildauslösebereichs zur Erfassung eines jeweiligen Luftbilds definiert, insbesondere wobei die durch den Flugplan definierten Auslösepositionen mit dem Fluggerät gesteuert angeflogen werden, insbesondere gemäss einem vorgegebenen Flugmuster, insbesondere mäanderförmig.

Gemäss einer speziellen Ausführungsform der Erfindung erfolgt ein Aktualisieren der nächsten Auslöseposition der Luftbildserie hinsichtlich deren Position im Flugplan in Abhängigkeit von einem tatsächlichen Erfassungszeitpunkt für die Luftbilderfassung und/oder von einer aktuellen, tatsächlichen Kameraposition bei der Luftbilderfassung. Damit kann eine dynamische Anpassung des Flugplans hinsichtlich der bereits erfassten und als nächste zu erfassende Gebietsteile erfolgen.

Bezüglich eines Erreichens der definierten Maximal-Winkelabweichung bezüglich der vorbestimmten Raumausrichtung kann erfindungsgemäss insbesondere eine Fluggeschwindigkeit des Fluggeräts angepasst werden, insbesondere wobei durch ein Reduzieren der Fluggeschwindigkeit ein verfügbares Erfassungszeitfenster zur Luftbilderfassung vergrössert wird.

Erfindungsgemäss kann insbesondere ausserdem in Abhängigkeit von dem Erfüllen der definierten Maximal-Winkelabweichung bezüglich der vorbestimmten Raumausrichtung während dem Durchfliegen des Bildauslösebereichs mit dem Fluggerät ein wiederholtes Anfliegen der dem Bildauslösebereich zugeordneten Auslöseposition und Erfassen des Luftbilds zu dieser Auslöseposition erfolgen.

Des Weiteren kann im Rahmen der Erfindung die Maximal-Winkelabweichung bezüglich der vorbestimmten Raumausrichtung 5° betragen, insbesondere 2°.

Die Erfindung betrifft ausserdem eine Steuerungseinheit für einen unbemannten Luftbilderfassungsflug, die ausgebildet ist zum Erhalt von Positionsinformation, von Ausrichtungsinformation und von Flugplandaten für ein unbemanntes Fluggerät. Ferner ist die Steuerungseinheit ausgebildet zur derartigen Erzeugung von Steuersignalen zur Steuerung einer Kamera des Fluggeräts für ein Luftbilderfassen, dass das Erfassen eines jeden Luftbilds einer Luftbildserie basierend auf den Steuersignalen gesteuert auslösbar ist
- bei einem Vorliegen einer aus der Positionsinformation ableitbaren Kameraposition innerhalb eines aus den Flugplandaten ableitbaren jeweiligen Bildauslösebereichs, wobei die Lage des jeweiligen Bildauslösebereichs zumindest durch jeweils eine dem jeweiligen Bildauslösebereich zugeordnete Auslöseposition gemäss der Flugplandaten bestimmt ist, und
- in Abhängigkeit von einer aus der Ausrichtungsinformation ableitbaren Ausrichtung einer optischen Kameraachse, welche von der inertialen Messeinheit (IMU) stammend, fortlaufend aktuell bestimmet wird, hinsichtlich eines Erfüllens einer definierten Maximal-Winkelabweichung bezüglich einer vorbestimmten Raumausrichtung (für die optische Kameraachse).

Ferner betrifft die Erfindung ein System aus einer erfindungsgemässen Steuerungseinheit (gemäss obiger Ausführung), einer Kamera, einem Speicher und einer Sensoreinheit zur Bestimmung der Kameraposition und Ausrichtung der optischen Kameraachse, mit einer GNSS-Empfangseinheit und einer Inertialmesseinheit. Die Positionsinformation und die Ausrichtungsinformation sind dabei durch die Sensoreinheit bestimmbar und bereitstellbar, die Flugplandaten vermittels des Speichers bereitstellbar und die Kamera mittels der durch die Steuerungseinheit erzeugbaren Steuersignale zur Luftbilderfassung ansteuerbar. Dabei wird die Luftbilderfassung nur durchgeführt, wenn die von der inertialen Messeinheit (IMU) ermittelte, fortlaufend aktuell bestimmte Ausrichtung der optischen Kameraachse eine definierte MaximalWinkelabweichung (a) bezüglich einer vorbestimmten Raumausrichtung (35) erfüllt.

Des Weiteren betrifft die Erfindung ein unbemanntes und steuerbares Fluggerät, insbesondere eine Drohne, mit einem obigen erfindungsgemässen System. Das Fluggerät verfügt über eine derartige Luftbilderfassungsfunktionalität, dass bei deren Ausführung gesteuert durch die Steuerungseinheit währende einer Flugbewegung des Fluggeräts ein Erfassen zumindest eines Luftbilds beim Durchfliegen eines Bildauslösebereichs mit dem Fluggerät, wobei die Lage des Bildauslösebereichs zumindest durch eine dem Bildauslösebereich zugeordnete Auslöseposition in einem Flugplan bestimmt ist, und in Abhängigkeit von der von der inertialen Messeinheit (IMU) fortlaufend aktuell bestimmten Ausrichtung der Kameraachse beim Durchfliegen des Bildauslösebereichs hinsichtlich einem Erfüllen einer definierten Maximal-Winkelabweichung bezüglich einer vorbestimmten Raumausrichtung (für die optische Achse der Kamera).

Gemäss einer speziellen Ausführungsform der Erfindung ist die Steuerungseinheit derart ausgebildet, dass mit dem Fluggerät ein erfindungsgemässes Verfahren nach einer der obigen Ausführungen ausführbar ist.

Ferner betrifft die Erfindung ein Computerprogrammprodukt mit Programmcode, der auf einem maschinenlesbaren Träger gespeichert ist oder zumindest teilweise durch eine elektromagnetische Welle verkörpert ist, zum Erhalten von Positionsinformation, von Ausrichtungsinformation und von Flugplandaten für ein unbemanntes Fluggerät mit Kamera und zur Steuerung einer Luftbilderfassung in Abhängigkeit von der Positionsinformation, der Ausrichtungsinformation und den Flugplandaten, wobei die Ausrichtungsinformation die von einer inertialen Messeinheit (IMU) fortlaufend aktuell bestimmte Ausrichtung und Position der Kamera, insbesondere gemäss einem erfindungsgemässen Verfahren, insbesondere wenn das Programm auf einer als erfindungsgemässe Steuerungseinheit ausgebildeten elektronischen Datenverarbeitungseinheit ausgeführt wird.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: eine Erfassung von Luftbildern mit einem erfindungsgemässen unbemannten Fluggerät;
- Fig.2: Auslösepunkte eines Flugplans und die an diesen jeweiligen Auslöspunkten erfindungsgemäss erfassten Geländebereichen ;
- Fig.3: das Prinzip eines erfindungsgemässen Erfassens zweier überlappender Luftbilder; und
- Fig.4: ein erfindungsgemässes Fluggerät und einen bezüglich der Ausrichtung des Fluggeräts zulässigen Winkelbereich α für das Erfassen eines Luftbilds.

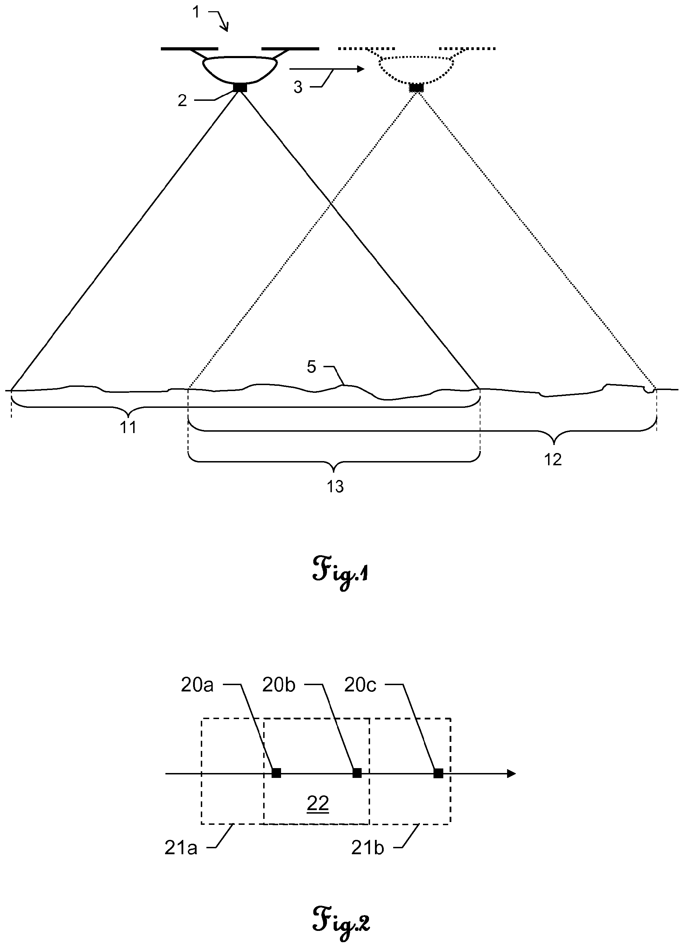

Fig. 1 zeigt ein erfindungsgemässes unbemanntes und steuerbares Fluggerät 1 (UAV) mit einer Kamera 2, wobei mit der Kamera 2 ein Bild eines Teils eines zu erfassenden Geländes 5 erfasst wird. Der Bereich 11 des Geländes 5 wird somit durch das Luftbild erfasst. Die Kamera 2 ist starr und in bekannter relativer Position bezüglich des UAV 1 mit dem Fluggerät 1 verbunden. Eine Position und Ausrichtung für das UAV 1 ist somit im Folgenden weitestgehend gleichbedeutend mit einer Position und Ausrichtung der Kamera 2.

Das Fluggerät 1 verfügt über eine Positionsbestimmungseinheit mittels derer fortlaufend die aktuelle Position des Fluggeräts 1 bzw. der Kamera 2 bestimmt wird. Diese Positionsbestimmungseinheit ist vorzugsweise ausgebildet als GNSS-Empfangseinheit (z.B. GPS, GLONASS oder Galileo), wobei GNSS-Positionssignale erfasst und basierend auf diesen Signalen eine Position des UAVs 1 abgeleitet wird. Zudem weist das UAV 1 eine inertiale Messeinheit (IMU) zur Bestimmung, insbesondere fortlaufend, einer aktuellen Ausrichtung des Fluggeräts 1 bzw. der Kamera 2 (also einer optischen Achse der Kamera) auf. Hierfür können beispielsweise ein Neigungssensor, ein Beschleunigungssensor, ein Magnetkompass und/oder ein Drehratensensor vorgesehen sein.

Das Fluggerät 1 bewegt sich entlang einer vorgegebenen Route (symbolisiert durch den Pfeil 3). Dabei werden fortlaufend die Position und die Ausrichtung des Fluggeräts 1 (der Kamera 2) bestimmt. Erreicht das UAV 1 eine Position für das Erfassen eines nächsten Bildes, so wird ein Luftbild entsprechend dem nächsten Geländeabschnitt 12 erfasst. Dabei ergibt sich in Abhängigkeit der Fluggeschwindigkeit und des jeweiligen Bildauslösezeitpunkts ein Überlappungsbereich 13 für die Geländeabschnitte, d.h. ein Geländebereich 13 der durch beide Luftbilder erfasst ist.

Gemäss der bestimmten Flugroute sind in Abhängigkeit des zu erfassenden Geländes 5 einzelne Auslöspunkte für das Erfassen von Luftbildern des Geländes 5 definiert, d.h. es sind Positionen für die zu erfassenden Luftbilder einer Luftbildserie bestimmt. Diese Punkte sind so vorgegeben, dass jeweils nacheinander erfasste Luftbilder jeweils einen bestimmten Bildüberlappungsbereich aufweisen. Beispielsweise sollen zwei benachbarte Luftbilder sich jeweils um mindestens 60% ihrer Bildfläche überschneiden. Dies erlaubt ein sicheres Erstellen eines Stereobildes des jeweiligen Geländeteils auf Basis dieser beiden Bilder.

Für jeden dieser Auslösepunkte ist ein Bildauslösebereich definiert. Dieser ist erfindungsgemäss derart gewählt, dass ein Bilderfassen während eines Durchfliegens dieses Bildauslösebereichs (solange während der Flugbewegung die Position des Fluggeräts 1 bzw. der Kamera 2 innerhalb des Bildauslösebereichs vorliegt) das Einhalten des mindestens geforderten Mindest-Überlappungsbereichs gewährleistet.

Ferner ist der Bildauslösebereich so gewählt, dass dadurch ein Sicherheitsbereich für das Bilderfassen gegeben ist, d.h. es ergibt sich ein Zeitfenster, in dem das Bilderfassen unter den vorgegebenen Messanforderungen ausgeführt werden kann. Beispielsweise ist für den Bildauslösebereich ein Startpunkt gesetzt, der einer 80-prozentigen Bildüberlappung (für zwei nacheinander zu erfassende Bilder) entspricht, und ein Endpunkt gesetzt, der einer 60-prozentigen Überlappung entspricht, wobei das Luftbild für den Auslösepunkt (der dem Bildauslösebereich zugeordnet ist) innerhalb dieser Grenzen zu erfassen ist. In Abhängigkeit der Fluggeschwindigkeit des Fluggeräts ergibt sich dabei das zulässige Zeitfenster für das Luftbilderfassen.

Innerhalb des Bildauslösebereichs bzw. des zulässigen Zeitfensters, d.h. beim Durchfliegen, wird das Bilderfassen für den betreffenden Auslösepunkt ausgelöst in Abhängigkeit davon, ob die Ausrichtung der optischen Achse der Kamera 2 (optische Kameraachse) innerhalb eines vorbestimmten Winkelbereichs um eine Nadir-Ausrichtung oder eine Horizontalausrichtung für die Kameraachse liegt. Diese Ausrichtung wird durch Bestimmen der Ausrichtung des UAVs 1 bzw. der Kamera 2 mittels der vorgesehenen IMU bestimmt.

Mit anderen Worten heisst das, dass ein Luftbild für einen Auslösepunkt während einem Durchfliegen des zugehörigen Bildauslösebereichs erfasst wird, sobald bzw. falls die Kameraausrichtung eine Maximal-Winkelabweichung bezüglich einer vorbestimmten Soll-Raumrichtung (Nadir- oder Horizontalausrichtung) erfüllt.

Dieses Verfahren basiert insbesondere darauf, dass die eigentliche Trajektorie für das UAV 1 vornehmlich durch Windstösse beeinträchtigt wird, das UAV 1 jedoch generell in eine horizontale Ausrichtung strebt. Diese automatisch erfolgende Bewegung wird durch eine "realtime" (kontinuierliche) Ausrichtungsmessung verfolgt. Bei einer bestimmten Abweichung von der Sollausrichtung um die Nadirausrichtung wird die Auslösung des Luftbilds bei Eintritt in den Bildauslösebereich verzögert und ggf. (bei Erfüllen der maximalen Sollwinkelabweichung) zu einem späteren Zeitpunkt innerhalb des sich ergebenden Zeitfensters vorgenommen.

Damit ist gewährleistet, dass für eine Serie von Luftbildern ein maximales Mass an Aufnahmen gleicher bzw. paralleler Blickrichtungen generiert werden, die das nachfolgende "postprocessing" deutlich erleichtern (hinsichtlich Schnelligkeit und Rechenaufwand) und zudem die Genauigkeit für die daraus erzeugbaren Geländeabbildungen erhöhen.

Fig. 2 zeigt die durch einen Flugplan definierten Auslösepunkte 20a-c und die an den Auslösepunkten 20a-b jeweils erfassten Luftbilder 21a-b. Die Auslösepunkte 20a-c sind so gesetzt, dass bei einer Bilderfassung genau an den jeweiligen Punkten 20a-c sich ein vorbestimmter Bildüberlappungsbereich 22 für zwei aufeinander folgend erfasste Bilder 21a-b ergibt, wobei dieser Bildüberlappungsbereich 22 beispielsweise einer Bildfläche von 50% bis 90% der Fläche der Luftbilder 21a-b entspricht.

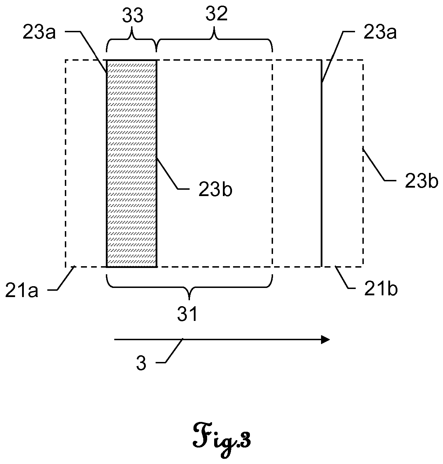

Fig. 3 zeigt das Prinzip eines erfindungsgemässen Erfassens zweier Luftbilder 21a-b bei einer Flugbewegung eines erfindungsgemässen Fluggeräts gemäss der durch Pfeil 3 repräsentierten Richtung.

Zunächst ist das Bild 21a im Flug des UAVs erfasst worden. Während des Weiterflugs des UAVs verschiebt sich das Sichtfeld der Kamera derart, dass ein dann zu einem späteren Zeitpunkt erfasstes Bild 21b korrespondierend zu der verschobenen Lage des Sichtfelds nicht mehr den identischen Erfassungsbereich aufweist, sondern der Erfassungsbereich der Bilder 21a-b teilweise überlappt, sofern das zweite Bild 21b noch im Rahmen der vorgegebenen einzuhaltenden Mindestüberlappung erfasst wird.

Erfindungsgemäss ist für das Erfassen der Luftbilder 21a-b ein Bildauslösebereich 33 definiert. Dieser Bildauslösebereich 33 wird definiert durch eine vorgegeben maximale Überlappung der Bilder 21a-b, z.B. 90% bis 80% der jeweiligen Bildfläche, und durch eine minimale Überlappung der Bilder 21a-b, z.B. 65% bis 55% der jeweiligen Bildfläche. Der maximale Überlappungsbereich 31 und der minimale Überlappungsbereich 32 der Bilder 21a-b definieren damit einen zulässigen relativen Versatz der Bilder 21a-b bzw. des Fluggeräts, mit dem diese Bilder 21a-b erfasst werden.

Bei einer Bildauslösung bei Erreichen der maximalen Überlappung, d.h. bei einem Erreichen einer Position mit dem Fluggerät (der Kamera) derart, dass das zweite Bild mit einer derartigen Überlappung erfassbar ist, wird das zweite Bild 21b in den Grenzen 23a bezüglich der Bewegungsrichtung bzw. Flugroute (gemäss Flugplan) des Fluggeräts erfasst.

Bei einer Bildauslösung bei Erreichen der minimalen Überlappung, wird das zweite Bild 21b in den Grenzen 23b bezüglich der Bewegungsrichtung des Fluggeräts erfasst. Das Bilderfassen ist zu jedem (Zeit-)Punkt innerhalb dieser Grenzen ausführbar.

Durch den Bildauslösebereich 33 ist damit ausserdem ein Streckenabschnitt bezüglich der Flugrichtung (Flugroute gemäss Flugplan) definiert, innerhalb dem das Luftbilderfassen erfolgen kann. Das Luftbilderfassen erfolgt damit erfindungsgemäss beim Durchfliegen dieses Streckenabschnitts.

Die Lage des Bildauslösebereich 33 wird ferner durch die Position des Auslösepunkts für das erste Bild 21a bzw. durch die bei dem Erfassen des ersten Bilds 21a vorliegenden Position des Fluggeräts bestimmt.

Ausserdem ist der Bildauslösebereich systembedingt abhängig von der aktuellen oder der im Rahmen der Flugplanung vorgegebenen Flughöhe des Fluggeräts und von dem Sichtfeld der Kamera.

Durch den einzuhaltenden Bildauslösebereich 33 bzw. Überlappungsbereich ist ein Auslösezeitrahmen für das Luftbilderfassen vorgegeben.

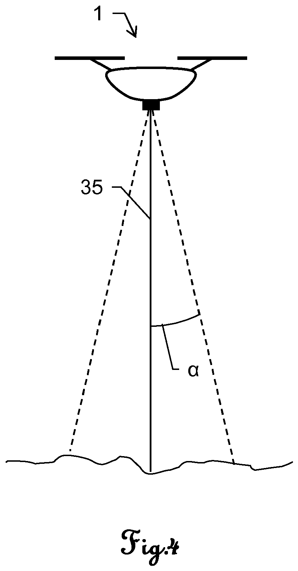

Erfindungsgemäss wird zudem die Ausrichtung des Fluggeräts bzw. der Kamera, d.h. die Lage des Luftfahrzeugs im Raum, fortlaufend bestimmt und in Abhängigkeit der jeweiligen Ausrichtung während dem Durchfliegen des Bildauslösebereichs 33 das Erfassen des Luftbilds ausgelöst. Hierfür ist eine vorgegebene Maximal-Winkelabweichung bezüglich einer vorgegebenen Sollausrichtung (z.B. Nadir-Ausrichtung 35) (vgl. Fig. 4) der Erfassungsrichtung (optischen Achse) der Kamera zu erfüllen.

Fig. 4 zeigt in diesem Zusammenhang ein erfindungsgemässes Fluggerät 1 und einen bezüglich der Ausrichtung des Fluggeräts 1 zulässigen Winkelbereich a, wobei bei einer Ausrichtung der Kamera des Fluggeräts 1 derart, dass die Erfassungsrichtung der Kamera innerhalb dieses Winkelbereichs α um die Nadir-Ausrichtung 35 liegt, ein Auslösen der Luftbilderfassung beim Durchfliegen des Bildauslösebereichs 33 erfolgt. Die Nadir-Ausrichtung 35 entspricht hierbei der vorbestimmten Raumausrichtung für die Kameraachse.

Mit anderen Worten heisst das, dass das Auslösen der Luftbilderfassung bei einer zu grossen Winkelabweichung bei einem Erreichen des Bildauslösebereichs (Eintreten in den Bildauslösebereich während der Flugbewegung) verzögert wird. Die Verzögerung wird dabei derart lange fortgesetzt bis die Ausrichtung des Fluggeräts 1 den definierten Messkriterien (zulässiger Winkelbereich bezüglich der Nadir-Ausrichtung) entspricht. Werden diese Messkriterien während dem Durchfliegen des Bildauslösebereichs erreicht, so wird das Bilderfassen ausgelöst.

Dadurch können Luftbilder einer Luftbildserie mit jeweils im Wesentlichen paralleler bzw. gleicher Ausrichtung der Kamera erfasst werden, wodurch eine deutlich gesteigerte Genauigkeit für ein daraus erzeugtes Stereo-Geländebild erzielt wird und zudem der dafür notwendige Bildverarbeitungsaufwand vergleichsweise gering gehalten werden kann (da dadurch eine deutlich geringe Anzahl von Bilder zu verarbeiten ist).

In Abhängigkeit des tatsächlichen Auslösezeitpunkt bzw. der tatsächlichen Position des Fuggeräts bei der Bilderfassung kann der Flugplan angepasst werden. Insbesondere kann eine Position eines nachfolgenden Auslösepunkt oder des Bildauslösebereichs für diesen Punkt beispielsweise bei einer stark verzögerten Auslösung der Bildaufnahme (z.B. Auslösung bei Erreichen einer einzuhaltenden MindestÜberlappung für die Bilder) so verändert werden, dass für die Luftbilderfassung zu diesem nächsten Auslösepunkt ein den Anforderungen entsprechender Bildauslösebereich (Einhaltung der Überlappung für die folgenden Luftbilder) gegeben ist.

Alternativ dazu kann der jeweilige nachfolgende Auslösepunkt und der zugehörige Auslösebereich positionsmässig beibehalten werden, wodurch beispielsweise (bei wiederum verzögerter Auslösung für den ersten Auslösepunkt) zwei unmittelbar aufeinander folgende Luftbilderfassungen erfolgen.

Wird während des Durchfliegens des Bildauslösebereichs z.B. eine starke Schwenkung bezüglich der bestimmten Ausrichtung des Fluggeräts festgestellt, so dass die Maximal-Winkelabweichung voraussichtlich nicht innerhalb des Bildauslösebereichs erreicht werden kann, so kann die Fluggeschwindigkeit des Fluggeräts angepasst (verringert) werden, damit das Zeitfenster zur Bilderfassung damit verändert (vergrössert) wird und die Wahrscheinlichkeit zur Erreichung der Maximal-Winkelabweichung vergrössert wird. Eine solche Anpassung der Fluggeschwindigkeit kann auch in Abhängigkeit anderer Faktoren erfolgen, z.B. für mit einer gesteigerten Genauigkeit zu erfassende Geländeabschnitte. Bei einem Nicht-Erfüllen dieses Winkel-Kriteriums beim Durchfliegen des Bereichs, wird für den betreffenden Auslösepunkt insbesondere kein Luftbild erfasst und die Luftbilderfassung bei dem nächsten Auslösepunkt fortgesetzt. Eine dadurch entstehende Lücke in der Luftbildserie kann erfindungsgemäss dadurch geschlossen werden, dass das Fluggerät gezielt erneut zu dem betreffenden Auslösepunkt (automatisch) gesteuert geflogen wird und bezüglich diesem Auslösepunkt das erfindungsgemässe Bilderfassen wiederholt wird. Das dabei entstehende Liftbild kann in die Luftbildserie eingefügt werden.

Es versteht sich, dass die dargestellten Figuren nur mögliche Ausführungsbeispiele schematisch darstellen.

## Patentansprüche

1. Verfahren zur Luftbilderfassung mit einem unbemannten und steuerbaren Fluggerät (1) mit Kamera (2), insbesondere Drohne, während einer Flugbewegung des Fluggeräts (1), mit
• einem fortlaufenden Bestimmen einer Kameraposition und einer Ausrichtung einer optischen Kameraachse und
• einem Erfassen einer Luftbildsserie,
**dadurch gekennzeichnet, dass**
das fortlaufende Bestimmen der Ausrichtung der optischen Kameraachse von einer inertialen Messeinheit (IMU) durchgeführt wird, die fortlaufend eine aktuelle Ausrichtung der optischen Kameraachse bestimmt, und dass
für jedes Luftbild (21a-b) der Luftbildserie das Erfassen des jeweiligen Luftbilds (21a-b) ausgelöst wird
• beim Durchfliegen eines jeweiligen Bildauslösebereichs (33) mit dem Fluggerät (1), wobei die Lage des jeweiligen Bildauslösebereichs (33) zumindest durch jeweils eine dem jeweiligen Bildauslösebereich (33) zugeordnete Auslöseposition (20a-c) in einem Flugplan bestimmt ist, und
• in Abhängigkeit von der von der inertialen Messeinheit (IMU) fortlaufend aktuell bestimmten Ausrichtung der Kameraachse beim Durchfliegen des jeweiligen Bildauslösebereichs (33) hinsichtlich eines Erfüllens einer definierten Maximal-Winkelabweichung (a) bezüglich einer vorbestimmten Raumausrichtung (35).

2. Verfahren nach Anspruch 1,
**dadurch gekennzeichnet, dass**
der Bildauslösebereich (33) durch einen vorgegebenen Überlappungsbereich (22,31,32) für zwei während der Flugbewegung nacheinander zu erfassende Luftbilder (21a-b) definiert ist, insbesondere wobei der Überlappungsbereich (22,31,32) einer Bildfläche zwischen 50% und 90% des Luftbilds (21a-b) entspricht, insbesondere einer Bildfläche zwischen 60% und 80% des Luftbilds (21a-b).

3. Verfahren nach Anspruch 2,
**dadurch gekennzeichnet, dass**
der Bildauslösebereich (33) derart bestimmt ist, dass ein bezüglich einer durch den Flugplan vorgegebenen Flugroute vorbestimmter Mindest-Bildüberlappungsbereich (32) für die zwei nacheinander zu erfassenden Luftbilder (21a-b) definiert ist, insbesondere wobei der Mindest-Bildüberlappungsbereich (32) beim Erfassen der zwei nacheinander zu erfassenden Luftbilder (21a-b) eingehalten wird.

4. Verfahren nach Anspruch 3,
**dadurch gekennzeichnet, dass**
der Mindest-Bildüberlappungsbereich (32) 60% der Bildfläche des Luftbilds (21a-b) beträgt.

5. Verfahren nach einem der Ansprüche 1 bis 4,
**dadurch gekennzeichnet, dass**
für den jeweiligen Bildauslösebereich (33) in Abhängigkeit von der zugeordneten Auslöseposition (20a-c) eine Startposition und eine Endposition definiert sind, insbesondere in Abhängigkeit von dem vorgegebenen Überlappungsbereich (22,31,32), insbesondere bezüglich der durch den Flugplan vorgegebenen Flugroute.

6. Verfahren nach einem der Ansprüche 1 bis 5,
**dadurch gekennzeichnet, dass**
die vorbestimmte Raumausrichtung eine NadirAusrichtung (35) oder eine horizontale Ausrichtung der Kameraachse ist.

7. Verfahren nach einem der Ansprüche 1 bis 6,
**dadurch gekennzeichnet, dass**
der Flugplan eine Mehrzahl von Auslösepositionen (20a-c) definiert, wobei jede Auslöseposition (20a-c) eine Lage eines jeweils zugeordneten Bildauslösebereichs (33) zur Erfassung eines jeweiligen Luftbilds (21a-b) definiert, insbesondere wobei die durch den Flugplan definierten Auslösepositionen (20a-c) mit dem Fluggerät (1) gesteuert angeflogen werden, insbesondere gemäss einem vorgegebenen Flugmuster, insbesondere mäanderförmig.

8. Verfahren nach einem der Ansprüche 1 bis 7,
**dadurch gekennzeichnet, dass**
ein Aktualisieren der nächsten Auslöseposition (20a-c) der Luftbildserie hinsichtlich deren Position im Flugplan erfolgt in Abhängigkeit von
• einem Erfassungszeitpunkt für die Luftbilderfassung und/oder
• einer aktuellen Kameraposition bei der Luftbilderfassung.

9. Verfahren nach einem der Ansprüche 1 bis 8,
**dadurch gekennzeichnet, dass**
zum Erreichen der definierten Maximal-Winkelabweichung (a) bezüglich der vorbestimmten Raumausrichtung (35) eine Fluggeschwindigkeit des Fluggeräts (1) angepasst wird, insbesondere wobei durch ein Reduzieren der Fluggeschwindigkeit ein verfügbares Erfassungszeitfenster zur Luftbilderfassung vergrössert wird.

10. Verfahren nach einem der Ansprüche 1 bis 9,
**dadurch gekennzeichnet, dass**
in Abhängigkeit von dem Erfüllen der definierten Maximal-Winkelabweichung (a) bezüglich der vorbestimmten Raumausrichtung (35) während dem Durchfliegen des Bildauslösebereichs (33) mit dem Fluggerät (1) ein wiederholtes Anfliegen der dem Bildauslösebereich (33) zugeordneten Auslöseposition (20a-c) und Erfassen des Luftbilds (21a-b) zu dieser Auslöseposition (20a-c) erfolgt, und/oder
die Maximal-Winkelabweichung (a) bezüglich der vorbestimmten Raumausrichtung 5° beträgt, insbesondere 2°.

11. Steuerungseinheit für einen unbemannten Luftbilderfassungsflug, ausgebildet zum Erhalt von Positionsinformation, von Ausrichtungsinformation und von Flugplandaten für ein unbemanntes Fluggerät (1),
**dadurch gekennzeichnet, dass**
die Ausrichtungsinformation von einer inertialen Messeinheit (IMU) stammt, die fortlaufend eine aktuelle Ausrichtung der optischen Kameraachse bestimmt und
die Steuerungseinheit ausgebildet ist zur derartigen Erzeugung von Steuersignalen zur Steuerung einer Kamera (2) des Fluggeräts (1) für ein Luftbilderfassen, dass das Erfassen eines jeden Luftbilds (21a-b) einer Luftbildserie basierend auf den Steuersignalen gesteuert auslösbar ist
• bei einem Vorliegen einer aus der Positionsinformation ableitbaren Kameraposition innerhalb eines aus den Flugplandaten ableitbaren jeweiligen Bildauslösebereichs (33), wobei die Lage des jeweiligen Bildauslösebereichs (33) zumindest durch jeweils eine dem jeweiligen Bildauslösebereich (33) zugeordnete Auslöseposition (20a-c) gemäss der Flugplandaten bestimmt ist, und
• in Abhängigkeit von einer aus der Ausrichtungsinformation ableitbaren Ausrichtung einer optischen Kameraachse, welche von der inertialen Messeinheit (IMU) stammend, fortlaufend aktuell bestimmt wird, hinsichtlich eines Erfüllens einer definierten Maximal-Winkelabweichung (a) bezüglich einer vorbestimmten Raumausrichtung (35).

12. System aus
• einer Steuerungseinheit gemäss Anspruch 11,
• einer Kamera (2),
• einem Speicher und
• einer Sensoreinheit zur Bestimmung einer Kameraposition und Ausrichtung der optischen Kameraachse, mit einer GNSS-Empfangseinheit und einer Inertialmesseinheit,
wobei
• die Positionsinformation und die Ausrichtungsinformation durch die Sensoreinheit bestimmbar und bereitstellbar sind,
• die Flugplandaten vermittels des Speichers bereitstellbar sind und
• die Kamera (2) mittels der durch die Steuerungseinheit erzeugbaren Steuersignale zur Luftbilderfassung ansteuerbar ist, wobei die Luftbilderfassung nur durchgeführt wird, wenn die von der inertialen Messeinheit (IMU) ermittelte, fortlaufend aktuell bestimmte Ausrichtung der optischen Kameraachse eine definierte Maximal-Winkelabweichung (a) bezüglich einer vorbestimmten Raumausrichtung (35) erfüllt.

13. Unbemanntes und steuerbares Fluggerät (1), insbesondere Drohne, mit einem System gemäss Anspruch 12,
**gekennzeichnet durch**
eine derartige Luftbilderfassungsfunktionalität, dass bei deren Ausführung gesteuert durch die Steuerungseinheit während einer Flugbewegung des Fluggeräts (1) ein Erfassen zumindest eines Luftbilds (21a-b) ausgelöst wird
• beim Durchfliegen eines Bildauslösebereichs (33) mit dem Fluggerät (1), wobei die Lage des Bildauslösebereichs (33) zumindest durch eine dem Bildauslösebereich (33) zugeordnete Auslöseposition in einem Flugplan bestimmt ist, und
• in Abhängigkeit von der von der inertialen Messeinheit (IMU) fortlaufend aktuell bestimmten Ausrichtung der Kameraachse beim Durchfliegen des Bildauslösebereichs (33) hinsichtlich eines Erfüllens einer definierten Maximal-Winkelabweichung (a) bezüglich einer vorbestimmten Raumausrichtung (35).

14. Fluggerät (1) nach Anspruch 13,
**dadurch gekennzeichnet, dass**
die Steuerungseinheit derart ausgebildet ist, dass mit dem Fluggerät (1) ein Verfahren nach einem der Ansprüche 1 bis 10 ausführbar ist.

15. Computerprogrammprodukt mit Programmcode, der auf einem maschinenlesbaren Träger gespeichert ist oder zumindest teilweise durch eine elektromagnetische Welle verkörpert ist,
• zum Erhalten von
□ Positionsinformation,
□ Ausrichtungsinformation und
□ Flugplandaten
für ein unbemanntes Fluggerät (1) mit Kamera (2) und
• zur Steuerung einer Luftbilderfassung in Abhängigkeit von der Positionsinformation, der Ausrichtungsinformation und den Flugplandaten, wobei die Ausrichtungsinformation die von einer inertialen Messeinheit (IMU) fortlaufend aktuell bestimmte Ausrichtung der Kameraachse ist, gemäss einem Verfahren nach einem der Ansprüche 1 bis 10, wenn das Programm auf einer als Steuerungseinheit nach einem der Ansprüche 11 bis 14 ausgebildeten elektronischen Datenverarbeitungseinheit ausgeführt wird.

## Claims

1. A method for aerial image capture using an unmanned and controllable aircraft (1) with camera (2), in particular a drone, during a flight movement of the aircraft (1), having
- a progressive determination of a camera position and an alignment of an optical camera axis and
- a capture of an aerial image series, **characterized in that,** the progressive determination of the alignment of the optical camera axis is carried out by an inertial measuring unit (IMU), which continuously determines a current alignment of the optical camera axis, and that for each aerial image (21a-b) of the aerial image series, the capture of the respective aerial image (21a-b) is triggered
- as the aircraft (1) flies through a respective image triggering region (33), wherein the location of the respective image triggering region (33) is determined at least by in each case a triggering position (20a-c), which is associated with the respective image triggering region (33), in a flight plan, and
- in dependence on the alignment of the camera axis continuously determined by the inertial measuring unit (IMU) during the flight through the respective image triggering region (33) in regard to a fulfillment of a defined maximum angle deviation (α) with respect to a predetermined spatial alignment (35).

2. The method as claimed in claim 1,
**characterized in that** the image triggering region (33) is defined by a predefined overlap range (22, 31, 32) for two aerial images (21a-b) to be captured successively during the flight movement, in particular wherein the overlap range (22, 31, 32) corresponds to an image area between 50% and 90% of the aerial image (21a-b), in particular an image area between 60% and 80% of the aerial image (21a-b).

3. The method as claimed in claim 2,
**characterized in that** the image triggering region (33) is determined such that a minimum image overlap range (32), which is predetermined with respect to a flight route predefined by the flight plan, is defined for the two aerial images (21a-b) to be captured successively, in particular wherein the minimum image overlap range (32) is maintained during the capture of the two aerial images (21a-b) to be captured successively.

4. The method as claimed in claim 3,
**characterized in that** the minimum image overlap range (32) is 60% of the image area of the aerial image (21a-b).

5. The method as claimed in any one of claims 1 to 4,
**characterized in that,** for the respective image triggering region (33), in dependence on the associated triggering position (20a-c), a starting position and an end position are defined, in particular in dependence on the predefined overlap range (22, 31, 32), in particular with respect to the flight route predefined by the flight plan.

6. The method as claimed in any one of claims 1 to 5,
**characterized in that** the predetermined spatial alignment is a nadir alignment (35) or a horizontal alignment of the camera axis.

7. The method as claimed in any one of claims 1 to 6,
**characterized in that** the flight plan defines a plurality of triggering positions (20a-c), wherein each triggering position (20a-c) defines a location of an image triggering region (33) associated in each case for capturing a respective aerial image (21a-b), in particular wherein the triggering positions (20a-c) defined by the flight plan are approached in flight in a controlled manner using the aircraft (1), in particular according to a predefined flight pattern, in particular in a meander.

8. The method as claimed in any one of claims 1 to 7,
**characterized in that** an update of the next triggering position (20a-c) of the aerial image series with regard to its position in the flight plan is performed in dependence on
- a capture time for the aerial image capture and/or
- a present camera position during the aerial image capture.

9. The method as claimed in any one of claims 1 to 8,
**characterized in that,** to achieve the defined maximum angle deviation (α) with respect to the predetermined spatial alignment (35), a flight speed of the aircraft (1) is adapted, in particular wherein an available capture time window for the aerial image capture is enlarged by reducing the flight speed.

10. The method as claimed in any one of claims 1 to 9,
**characterized in that,** in dependence on the fulfillment of the defined maximum angle deviation (α) with respect to the predetermined spatial alignment (35) as the aircraft (1) flies through the image triggering region (33), a repeated approach flight of the triggering position (20a-c) associated with the image triggering region (33) and capture of the aerial image (21a-b) at this triggering position (20a-c) are performed, and/or the maximum angle deviation (α) with respect to the predetermined spatial alignment is 5°, in particular 2°.

11. A control unit for an unmanned aerial image capture flight, designed to obtain position information, alignment information, and flight plan data for an unmanned aircraft (1),
**characterized in that** the alignment information comes from an inertial measuring unit (IMU), which continuously determines a current alignment of the optical camera axis and the control unit is designed to generate control signals for controlling a camera (2) of the aircraft (1) for aerial image capture such that the capture of each aerial image (21a-b) of an aerial image series can be triggered in a manner controlled based on the control signals
- if a camera position derivable from the position information is present inside a respective image triggering region (33) derivable from the flight plan data, wherein the location of the respective image triggering region (33) is determined at least by in each case a triggering position (20a-c), which is associated with the respective image triggering region (33), according to the flight plan data, and
- in dependence on an alignment of an optical camera axis, which, coming from the inertial measuring unit (IMU), is derivable from the alignment information and which is continuously determined, in regard to a fulfillment of a defined maximum angle deviation (α) with respect to a predetermined spatial alignment (35).

12. A system made of
- a control unit as claimed in claim 11,
- a camera (2),
- a memory, and
- a sensor unit for determining a camera position and alignment of the optical camera axis, with a GNSS receiving unit and an inertial measuring unit,
wherein
- the position information and the alignment information can be determined and provided by the sensor unit,
- the flight plan data can be provided by means of the memory, and
- the camera (2) can be activated by means of the control signals, which can be generated by the control unit, for the aerial image capture, wherein the aerial image capture is only carried out if the continuously determined alignment of the optical camera axis determined by the inertial measuring unit (IMU) fulfills a defined maximum angular deviation (a) with respect to a predetermined spatial alignment (35).

13. An unmanned and controllable aircraft (1), in particular a drone, having a system as claimed in claim 12,
**characterized by** an aerial image capture functionality such that, during the execution thereof, controlled by the control unit during a flight movement of the aircraft (1), a capture of at least one aerial image (21a-b) is triggered
- as the aircraft (1) flies through an image triggering region (33), wherein the location of the image triggering region (33) is determined at least by a triggering position, which is associated with the image triggering region (33), in a flight plan, and
- in dependence on the alignment of the camera axis continuously determined by the inertial measuring unit (IMU) during the flight through the image triggering region (33) in regard to a fulfillment of a defined maximum angle deviation (α) with respect to a predetermined spatial alignment (35).

14. The aircraft (1) as claimed in claim 13,
**characterized in that** the control unit is designed such that a method as claimed in any one of claims 1 to 10 is executable using the aircraft (1).

15. A computer program product having program code which is stored on a machine-readable carrier or is embodied at least partially by an electromagnetic wave,
- for obtaining
- position information,
- alignment information, and
- flight plan data for an unmanned aircraft (1) with camera (2) and
- for controlling an aerial image capture in dependence on the position information, the alignment information, and the flight plan data, wherein the alignment information is the alignment of the camera axis continuously determined by an inertial measurement unit (IMU),
according to a method as claimed in any one of claims 1 to 10, when the program is executed on an electronic data processing unit designed as a control unit as claimed in any one of claims 11 to 14.

## Revendications

1. Procédé pour la détection d'images aériennes avec un aéronef commandable inhabité (1) avec une caméra (2), en particulier un drone, pendant un mouvement aérien de l'aéronef (1) avec
• une détermination en continu d'une position de caméra et d'une orientation d'un axe optique de la caméra et
• une détection d'une série d'images aériennes,
**caractérisé en ce que**
la détermination en continu de l'orientation de l'axe optique de la caméra est effectuée par une unité de mesure inertielle (IMU) qui détermine en continu une orientation actuelle de l'axe optique de la caméra et que,
pour chaque image aérienne (21a-b) de la série d'images aériennes, la détection de chaque image aérienne (21 a-b) est déclenchée
• lors de la traversée en vol d'une zone respective de déclenchement d'image (33) avec l'aéronef (1), cependant que la situation de la zone respective de déclenchement d'image (33) est déterminée dans un plan de vol par respectivement une position de déclenchement (20a-c) associée à la zone respective de déclenchement d'image (33) et
• en fonction de l'orientation de l'axe de la caméra actuellement déterminée en continue par l'unité de mesure inertielle (IMU) lors de la traversée en vol de la zone respective de déclenchement d'image (33) pour ce qui est du respect d'un écart angulaire maximal défini (a) par rapport à une orientation spatiale prédéfinie (35).

2. Procédé selon la revendication 1,
**caractérisé en ce que** la zone de déclenchement d'image (33) est définie par une zone de chevauchement prédéterminée (22, 31, 32) pour deux images aériennes (21 a-b) devant être détectées l'une après l'autre pendant le mouvement aérien, en particulier cependant que la zone de chevauchement prédéterminée (22, 31, 32) correspond à une surface d'image entre 50% et 90% de l'image aérienne (21 a-b), en particulier à une surface d'image entre 60% et 80% de l'image aérienne (21 a-b).

3. Procédé selon la revendication 2,
**caractérisé en ce que** la zone de déclenchement d'image (33) est déterminée de telle manière qu'une zone de chevauchement d'image minimal (32) prédéterminée par rapport à une trajectoire de vol prédéfinie par le plan de vol est définie pour les deux images aériennes (21 a-b) devant être détectées l'une après l'autre, en particulier cependant que la zone de chevauchement d'image minimal (32) est respectée lors de la détection des deux images aériennes (21 a-b) devant être détectées l'une après l'autre.

4. Procédé selon la revendication 3,
**caractérisé en ce que** la zone de chevauchement d'image minimal (32) est de 60% de la surface d'image de l'image aérienne (21 a-b).

5. Procédé selon l'une des revendications 1 à 4,
**caractérisé en ce que**, pour la zone respective de déclenchement d'image (33) en fonction de la position de déclenchement associée (20a-c), il est défini une position de départ et une position terminale, en particulier en fonction de la zone de chevauchement prédéterminée (22, 31, 32), en particulier pour ce qui est de la trajectoire de vol prédéterminée par le plan de vol.

6. Procédé selon l'une des revendications 1 à 5,
**caractérisé en ce que** l'orientation spatiale prédéterminée est une orientation nadir (35) ou une orientation horizontale de l'axe de la caméra.

7. Procédé selon l'une des revendications 1 à 6,
**caractérisé en ce que** le plan de vol définit une multitude de positions de déclenchement (20a-c), cependant que chaque position de déclenchement (20 a-c) définit une position d'une zone de déclenchement d'image respectivement associée (33) pour la détection d'une image aérienne respective (21 a-b), en particulier cependant que les positions de déclenchement (20 a-c) définies par le plan de vol peuvent être approchées en vol commandé avec l'aéronef (1), en particulier selon un schéma de vol prédéterminé, en particulier en forme de méandres.

8. Procédé selon l'une des revendications 1 à 7,
**caractérisé en ce qu'**une actualisation de la prochaine position de déclenchement (20 a-c) se fait par rapport à sa position dans le plan de vol en fonction
• d'un moment de détection pour la détection d'images aériennes et/ou
• d'une position actuelle de la caméra lors de la détection d'images aériennes.

9. Procédé selon l'une des revendications 1 à 8,
**caractérisé en ce que**, pour atteindre l'écart angulaire maximal défini (a) par rapport à une orientation spatiale prédéfinie (35), une vitesse de vol de l'aéronef (1) est adaptée, en particulier cependant qu'une fenêtre de temps de détection disponible est agrandie par une réduction de la vitesse de vol.

10. Procédé selon l'une des revendications 1 à 9,
**caractérisé en ce qu'**en fonction de la réalisation de l'écart angulaire maximal défini (a) par rapport à une orientation spatiale prédéfinie (35) pendant la traversée en vol de la zone de déclenchement d'image (33) avec l'aéronef (1) une approche répétée de la position de déclenchement (20 a-c) associée à la zone de déclenchement d'image (33) et à la détection de l'image aérienne (21 a-b) à cette position de déclenchement (20a-c) est effectuée et/ou l'écart angulaire maximal (a) par rapport à l'orientation spatiale prédéfinie (35) est de 5°, en particulier de 2°.

11. Unité de commande pour un vol inhabité de détection d'images aériennes conçu pour l'obtention d'informations de position, d'informations d'orientation et de données de plan de vol pour un aéronef inhabité (1),
**caractérisée en ce que** les informations d'orientation proviennent d'une unité de mesure inertielle (IMU) qui détermine en continu une orientation actuelle de l'axe optique de la caméra et que l'unité de commande est conçue pour une telle génération de signaux de commande pour la commande d'une caméra (2) de l'aéronef (1) pour une détection d'images aériennes, que la détection de chaque image aérienne (21 a-b) d'une série d'images aériennes peut être déclenchée en étant commandée sur la base des signaux de commande
• en présence d'une position de caméra qui peut être déduite des informations de position à l'intérieur d'une zone de déclenchement d'image (33) respective pouvant être déduite des données de plan de vol, cependant que la position de la zone de déclenchement d'image respective (33) est déterminée au moins par la position de déclenchement (20 a-c) associée à la zone de déclenchement d'image respective (33) selon les données de plan de vol et
• en fonction d'une orientation de l'axe optique de la caméra qui peut être déduite des informations d'orientation qui, provenant de l'unité de mesure inertielle (IMU), est déterminée de manière actuelle en continu, par rapport au respect d'un écart angulaire maximal défini (a) par rapport à une orientation spatiale prédéfinie (35).

12. Système composé
• d'une unité de commande selon la revendication 11,
• d'une caméra (2),
• d'une mémoire et
• d'une unité de capteur pour déterminer une position de la caméra et une orientation de l'axe de la caméra avec une unité de réception GNSS et une unité de mesure inertielle,
cependant que
• les informations de position et les informations d'orientation peuvent être déterminées et mises à disposition par l'unité de capteur,
• les données de plan de vol peuvent être mises à disposition au moyen de la mémoire et
• la caméra (2) peut être commandée au moyen de signaux de commande pouvant être générés par l'unité de commande pour la détection d'images aériennes, cependant que la détection d'images aériennes ne peut être exécutée que si l'orientation de l'axe optique de la caméra déterminée de manière actuelle en continu par l'unité de mesure inertielle (IMU) respecte un écart angulaire maximal défini (a) par rapport à une orientation spatiale prédéfinie (35).

13. Aéronef inhabité et commandable, en particulier drone, avec un système selon la revendication 12, **caractérisé par** une fonctionnalité de détection d'images aériennes telle que, lors de son exécution commandée par l'unité de commande pendant un mouvement de vol de l'aéronef (1) une détection d'au moins une image aérienne (21 a-b) est déclenchée
o lors de la traversée en vol d'une zone de déclenchement d'image (33) avec l'aéronef (1), cependant que la position de la zone de déclenchement d'image (33) est déterminée au moins par une position de déclenchement associée à la zone de déclenchement d'image (33) dans un plan de vol et
o en fonction de l'orientation de l'axe optique de la caméra déterminée de manière actuelle en continu par l'unité de mesure inertielle (IMU) lors de la traversée en vol de la zone de déclenchement d'image (33) par rapport au respect d'un écart angulaire maximal défini (a) par rapport à une orientation spatiale prédéfinie (35).

14. Aéronef (1) selon la revendication 13, **caractérisé en ce que** l'unité de commande est conçu de telle manière qu'un procédé selon l'une des revendications 1 à 10 peut être exécuté avec l'aéronef (1).

15. Produit programme d'ordinateur avec code de programme qui est mémorisé sur un support lisible par machine ou matérialisé au moins partiellement par une onde électromagnétique
• pour la détection
o d'informations de position,
o d'informations d'orientation et
o de données de plan de vol pour un aéronef inhabité (1) avec une caméra (2) et
• pour la commande d'une détection d'images aériennes en fonction des informations de position, des informations d'orientation et des données de plan de vol, cependant que les informations d'orientation sont l'orientation de l'axe de la caméra déterminée de manière actuelle en continu par une unité de mesure inertielle (IMU),
selon un procédé selon l'une des revendications 1 à 10, si le programme est exécuté sur une unité électronique de traitement de données configurée selon l'une des revendications 11 à 14.
